# EUROPÄISCHE PATENTSCHRIFT

(11) **EP 2 215 013 B1**
(45) Veröffentlichungstag und Bekanntmachung des Hinweises auf die Patenterteilung: **19.04.2017**
(21) Anmeldenummer: 08849862.1
(22) Anmeldetag: 10.11.2008
(51) Int. Cl.: B01J 19/00, C01C 3/02

(54) **VERBESSERTES VERFAHREN ZUR HERSTELLUNG VON BLAUSÄURE DURCH KATALYTISCHE DEHYDRATISIERUNG VON GASFÖRMIGEM FORMAMID**
IMPROVED METHOD FOR THE PRODUCTION OF HYDROCYANIC ACID BY MEANS OF CATALYTIC DEHYDRATION OF GASEOUS FORMAMIDE
PROCÉDÉ AMÉLIORÉ DE PRODUCTION D'ACIDE PRUSSIQUE PAR DÉSHYDRATATION CATALYTIQUE DE FORMAMIDE GAZEUX

(30) Priorität: 13.11.2007 EP 07120540
(43) Veröffentlichungstag der Anmeldung: 11.08.2010
(73) Patentinhaber: Karlsruhe Institute of Technology, 76131 Karlsruhe (DE)
(72) Erfinder: BOEHLING, Ralf, 64653 Lorsch (DE); DECKERS, Andreas, 55234 Flomborn (DE); SCHNEIDER, Thomas, 67227 Frankenthal (DE); ACHHAMMER, Guenther, 68309 Mannheim (DE); LUYKEN, Hermann, 67069 Ludwigshafen (DE); PFAB, Peter, 67433 Neustadt (DE); SCHUBERT, Klaus, 76227 Karlsruhe (DE); KRAUT, Manfred, 76351 Linkenheim-Hochstetten (DE)
(74) Vertreter: Hollah, Dorothee
(86) Internationale Anmeldenummer: PCT/EP2008/065185
(87) Internationale Veröffentlichungsnummer: WO 2009/062897

(56) Entgegenhaltungen:
- EP-A- 0 209 039
- WO-A-2004/050587
- DE-A1-102005 051 637
- FR-A- 646 815
- GB-A- 800 158
- US-A- 2 429 262
- US-A- 2 529 546

## Beschreibung

Die vorliegende Erfindung betrifft ein Verfahren zur Herstellung von Blausäure, umfassend die Bereitstellung von gasförmigem Formamid durch Verdampfen von flüssigem Formamid in einem Verdampfer (Schritt i)) und die katalytische Dehydratisierung des gasförmigen Formamids (Schritt ii)) und die Verwendung eines Mikroverdampfers zur Verdampfung von Formamid in einem Verfahren zur Herstellung von Blausäure aus Formamid.

Blausäure ist eine wichtige Grundchemikalie, die als Ausgangsprodukt zum Beispiel in zahlreichen organischen Synthesen wie der Herstellung von Adiponitril, Methacrylsäureestern, Methionin und Komplexbildnern (NTA, EDTA) dient. Darüber hinaus wird Blausäure für die Herstellung von Alkalicyaniden benötigt, die im Bergbau und in der metallurgischen Industrie eingesetzt werden.

Die größte Menge an Blausäure wird durch Umsetzung von Methan (Erdgas) und Ammoniak produziert. In dem so genannten Andrussow-Prozess wird simultan Luftsauerstoff zugegeben. Auf diese Weise verläuft die Herstellung von Blausäure autotherm. Im Gegensatz dazu wird bei dem so genannten BMA-Verfahren der Degussa AG sauerstofffrei gearbeitet. Die endotherme katalytische Umsetzung von Methan mit Ammoniak wird daher in dem BMA-Verfahren extern mit einem Heizmedium (Methan oder H₂) betrieben. Nachteilig bei diesen Verfahren ist der hohe Zwangsanfall von Ammoniumsulfat, da die Umsetzung von Methan ökonomisch nur mit einem NH₃-Überschuss gelingt. Das nicht umgesetzte Ammoniak wird mit Schwefelsäure aus dem Rohprozessgas ausgewaschen. Des Weiteren ist bei beiden vorstehend genannten Verfahren die erforderliche hohe Verfahrenstemperatur nachteilig.

Ein weiteres wichtiges Verfahren zur Herstellung von HCN ist der so genannte SOHIO-Prozess. Bei der Ammon-Oxidation von Propen/Propan zu Acrylnitril entstehen ca. 10% (bezogen auf Propen/Propan) Blausäure als Nebenprodukt.

Ein weiteres wichtiges Verfahren zur industriellen Herstellung von Blausäure ist die thermische Dehydratisierung von Formamid im Vakuum, die nach der folgenden Gleichung (I) abläuft:

HCONH₂ → HCN + H₂O (I)

Diese Umsetzung ist von der Zersetzung des Formamids gemäß folgender Gleichung (II) unter Bildung von Ammoniak und Kohlenmonoxid begleitet:

HCONH₂ → NH₃ + CO (II)

Ammoniak wird mit Schwefelsäure aus dem Rohgas ausgewaschen. Aufgrund der hohen Selektivität fällt jedoch nur sehr wenig Ammoniumsulfat an.

Der gebildete Ammoniak katalysiert die Polymerisation der gewünschten Blausäure und führt somit zu einer Beeinträchtigung der Qualität der Blausäure und einer Verringerung der Ausbeute an der gewünschten Blausäure.

Die Polymerisation von Blausäure und die damit verbundene Russbildung kann durch die Zugabe von geringen Mengen Sauerstoff in Form von Luft, wie in EP-A 0 209 039 offenbart ist, unterdrückt werden. In EP-A 0 209 039 ist ein Verfahren zur thermolytischen Spaltung von Formamid an hoch gesinterten Aluminiumoxid- oder Aluminiumoxid-Siliziumdioxid-Formkörpern oder an Hochtemperatur-korrosionsfesten Chrom-Nickel-Edelstahl-Formkörpern offenbart.

Im Stand der Technik sind weitere Verfahren zur Herstellung von Blausäure durch katalytische Dehydratisierung von gasförmigem Formamid bekannt, z. B. DE-973173, GB-800158, FR-646815.

So betrifft WO 2004/050587 ein Verfahren zur Herstellung von Blausäure durch katalytische Dehydratisierung von gasförmigem Formamid in einem Reaktor, der eine innere Reaktoroberfläche aus einem Stahl enthaltend Eisen sowie Chrom und Nickel aufweist, wobei der Reaktor bevorzugt keine zusätzlichen Einbauten und/oder Katalysatoren enthält.

In WO 2006/027176 ist ein Verfahren zur Herstellung von Blausäure durch katalytische Dehydratisierung von gasförmigem Formamid offenbart, bei dem aus dem Produktgemisch bei Dehydratisierung ein Formamid enthaltender Rückstrom gewonnen wird und in die Dehydratisierung zurückgeführt wird, wobei der Formamid enthaltende Rückführstrom 5 bis 50 Gew.-% Wasser enthält.

In US 2,429,262 ist ein Verfahren zur Herstellung von Blausäure durch thermische Zersetzung von Formamid offenbart, wobei zur katalytischen Zersetzung des Formamids eine Lösung einer Substanz, ausgewählt aus der Gruppe bestehend aus Phosphorsäure und Verbindungen, die bei thermischer Zersetzung Phosphorsäure bilden, in einem Strom aus Formamid-Dampf gegeben wird, die Mischung auf 300 bis 700°C aufgeheizt wird und die erhaltenen Produkte schnell gekühlt werden. Gemäß US 2,429,262 erfolgt die Verdampfung des Formamids zur Bildung von Formamid-Dampf bevorzugt sehr schnell. Beispielsweise kann das Formamid in einem dünnen Strom oder in kleinen diskreten Mengen in einen auf eine Temperatur oberhalb des Siedepunktes des Formamids, bevorzugt 230 bis 300°C oder höher aufgeheizten Schnellverdampfer gegeben werden.

In US 2,529,546 ist ein Verfahren zur Herstellung von Blausäure durch thermische Zersetzung von Formamid offenbart, wobei das Formamid in der Dampfphase in Anwesenheit eines Katalysators enthaltend ein Metallwolframat thermisch zersetzt wird. In US 2,529,546 wird - wie in US 2,429,262 - vorgeschlagen, zur Verdampfung von Formamid einen Schnellverdampfer einzusetzen, mit dem das flüssige Formamid sehr schnell aufgeheizt werden kann.

Gemäß den Beispielen in US 2,429,262 und US 2,529,546 wird die Verdampfung von Formamid bei Normaldruck bei 250°C durchgeführt. Aus den Beispielen in US 2,529,546 ergibt sich jedoch, dass die Selektivität in dem in US 2,529,546 offenbarten Verfahren zur Herstellung von Blausäure gering ist.

In DE-A 10 2005 051637 ist ein spezielles Reaktorsystem offenbart, mit einem eine Reaktionszone zur Durchführung einer chemischen Reaktion aufweisenden mikrostrukturierten Reaktor, wobei die Reaktionszone mittels einer Wärmequelle aufgeheizt wird. Bei der Wärmequelle handelt es sich um eine kontaktlose Heizung. Das Reaktorsystem ist für katalytische Gasphasenanwendungen geeignet, wobei die HCN-Synthese nach dem Andrussow-Verfahren (Oxidation eines Gemisches aus Ammoniak und Methan bei ca. 1200°C an einem Pt-Katalysator (im Allgemeinen ein Pt-Netz)), nach dem Degussa-BMA-Verfahren (katalytische Umsetzung von Ammoniak und Methan zu Blausäure und Wasserstoff) und nach dem Shavinigan-Verfahren (Umsetzung von Propan und Ammoniak in Abwesenheit eines Katalysators bei Temperaturen von im Allgemeinen > 1500°C, bei dem die Reaktionswärme mit Hilfe eines direkt beheizten Wirbelbetts aus Kohleteilchen zugeführt wird) erwähnt ist. Diese typischen Hochtemperatur-Gasphasenreaktionen unterscheiden sich aus verfahrenstechnischer Sicht wesentlich von dem Verfahren zur Herstellung von Blausäure mittels Formamid-Spaltung, das zwei Stufen umfasst, nämlich die Verdampfung von bei Raumtemperatur flüssigem Formamid (Siedepunkt: 210°C) und die anschließende katalytische Spaltung zu Blausäure und Wasser (katalytische Dehydratisierung). Neben einem Reaktor, in dem die Spaltung des Formamid-Dampfes erfolgt, muss somit in diesem Verfahren ein Verdampfer bereitgestellt werden, worin das flüssige Formamid zunächst verdampft wird. Da die Ausgangsprodukte in den anderen vorstehend genannten Verfahren bei Raumtemperatur gasförmig sind, umfassen diese Verfahren keinen der Verdampfung von Formamid entsprechenden Schritt.

Aufgabe der vorliegenden Erfindung gegenüber dem vorstehend genannten Stand der Technik ist es, ein Verfahren zur Herstellung von Blausäure durch katalytische Dehydratisierung von gasförmigem Formamid bereitzustellen, das eine hohe Selektivität zu der gewünschten Blausäure aufweist und bei möglichst hohen Drucken (nahe Normaldruck oder höher) betrieben werden kann.

Diese Aufgabe wird durch ein Verfahren zur Herstellung von Blausäure wie im Anspruch 1 definiert, umfassend
i) Bereitstellung von gasförmigem Formamid durch Verdampfen von flüssigem Formamid in einem Verdampfer; und
ii) katalytische Dehydratisierung des gasförmigen Formamids
gelöst, wobei in Schritt i) die Verweilzeit des Formamids in dem Verdampfer < 20 s, bevorzugt < 10 s, bezogen auf das flüssige Formamid, beträgt. Das erfindungsgemäße Verfahren ist dann dadurch gekennzeichnet, dass als Verdampfer in Schritt i) ein Mikroverdampfer eingesetzt wird, dessen Kanäle für die Führung des Formamids einen hydraulischen Durchmesser von 5 bis 1000 µm aufweisen. Die Verdampfung in Schritt i) erfolgt bei Temperaturen von 185°C bis 265°C.

Überraschenderweise wurde gefunden, dass aufgrund der sehr kurzen Verweilzeiten im Verdampfer das Formamid in Schritt i) nahezu vollständig, bevorzugt vollständig, ohne Nebenprodukt-Bildung verdampft werden kann. Üblicherweise wird mithilfe des erfindungsgemäßen Verfahrens Formamid mit Ausbeute-Verlusten von < 2 % (bezogen auf die Gesamtmenge an eingesetztem Formamid), bevorzugt < 0,5 % verdampft.

Bevorzugt wird die Verdampfung in Schritt i) des erfindungsgemäßen Verfahrens bei einem Druck von 400 mbar bis 4 bar, besonders bevorzugt 600 mbar bis 2 bar, ganz besonders bevorzugt 800 mbar bis 1,4 bar durchgeführt. Die Temperaturen in Schritt i) des erfindungsgemäßen Verfahrens betragen im Allgemeinen 185°C bis 265°C, bevorzugt 210°C bis 260°C, besonders bevorzugt 215°C bis 240°C.

Vorstehend und im Folgenden wird unter dem angegebenen Druck jeweils der Absolutdruck verstanden.

Ein weiterer wesentlicher Faktor zur Herstellung von Blausäure durch Dehydratisierung von gasförmigem Formamid gemäß dem erfindungsgemäßen Verfahren ist nicht die Oberflächenbelastung, d.h. ebenso nicht der Wärmedurchgangskoeffizient des in Schritt i) zur Verdampfung von Formamid eingesetzten Verdampfers. Die Oberflächenbelastung des Verdampfers beträgt im Allgemeinen 5 bis 500 kg/(m²h). Hier erreichen effiziente dem Stand der Technik entsprechende Wärmetauscher/Verdampfer ähnliche Werte. Entscheidend ist überraschenderweise die Flüssigbelastung bezogen auf das Verdampfervolumen (volumenspezifische Verdampferleistung). Bevorzugt beträgt die volumenspezifische Verdampferleistung des in Schritt i) des erfindungsgemäßen Verfahrens eingesetzten Verdampfers 10 bis 2000 MW/m³, besonders bevorzugt 50 bis 1500 MW/m³, ganz besonders bevorzugt 100 bis 1000 MW/m³.

Bevorzugt wird der in Schritt i) des erfindungsgemäßen Verfahrens eingesetzte Verdampfer - im Falle eines kondensierenden Mediums oder einer strömenden Flüssigkeit als Wärmeträger - mit einer Temperatur beheizt, die mindestens 5°C, bevorzugt 5 bis 150°C, besonders bevorzugt 10 bis 100°C, ganz besonders bevorzugt 20 bis 50°C oberhalb der Siedetemperatur des Formamids (219°C) liegt.

Im Falle strömender Gase als Wärmeträger, z.B. Rauchgase, liegt die Temperatur im Allgemeinen mindestens 5°C, bevorzugt 30 bis 600°C, besonders bevorzugt 50 bis 400°C, ganz besonders bevorzugt 100 bis 300°C oberhalb der Siedetemperatur des Formamids (210°C).

Als Temperiermedium kann jedes dem Fachmann bekannte Temperiermedium (Wärmeträger), z.B. Wasserdampf, Heizgas oder Heizflüssigkeit eingesetzt werden. Des Weiteren ist eine Temperierung des Verdampfers durch elektrische Wärmezufuhr, z.B. über Heizdrähte oder Heizkerzen, möglich. Geeignete Vorrichtungen bzw. Maßnahmen zur Temperierung der Oberflächen des Verdampfers sind dem Fachmann bekannt.

Als geeignete Verdampfer in Schritt i) des erfindungsgemäßen Verfahrens mikrostrukturierte Apparate ein-gesetzt. Der Einsatz mikrostrukturierter Apparate als Verdampfer - im Folgenden Mikroverdampfer genannt - ist dem Fachmann bekannt und z.B. in DE-A 101 32 370, WO 2005/016512 sowie WO 2006/108796 beschrieben.

In DE 101 32 370 ist ein Mikroverdampfer für Brennstoffzellen beschrieben, der klein ist und ein gleichmäßig verdampftes Medium bereitstellt. Das Medium, das gemäß DE-A 101 32 370 verdampft wird, ist Methanol.

In WO 2005/016512 ist ein Mikroverdampfer beschrieben, der in einem Verfahren zur Entfernung von wenigstens einer flüchtigen Verbindung aus einem reaktiven oder nicht reaktiven Stoffgemisch eingesetzt wird. Der Mikroverdampfer weist Kanäle für die Führung des Stoffgemisches mit einem hydraulischen Durchmesser von 5 bis 1000 µm und eine spezifische Verdampferfläche von mindestens 10³m²/m³ auf.

In WO 2006/108 796 wird ein Mikroverdampfer beschrieben, mit einem aus wärmeleitendem Material bestehenden Gehäuse, in dem eine Flüssigkeit-Zuführkammer und eine Dampfsammelkammer vorgesehen sind, zwischen denen Mikrokanäle mit Querschnittsabmessungen im Submillimeter-Bereich in einer Ebene nebeneinander angeordnet sind, sowie mit Mitteln zum Erhitzen der zu verdampfenden Flüssigkeit, wobei die Mikroverdampferkanäle in einem trapezförmigem Bereich angeordnet sind, der einen in die Flüssigkeit-Zuführkammer mündenden querschnittskleineren Eintrittsbereich und einen in die Dampfsammelkammer mündenden querschnittsgrößeren Austrittsbereich aufweist. Gemäß WO 2006/108796 wird der Mikroverdampfer eingesetzt, um flüssige Medien, z.B. Wasser, Alkohole oder Alkohol-Wasser-Gemische, Flüssiggase oder Flüssigalkane für eine Weiterverarbeitung zu verdampfen. Die Mikroverdampfer werden beispielsweise im Bereich der Brennstoffzellentechnik eingesetzt.

Geeignete Mikroverdampfer sind dem Fachmann somit bekannt. Der Einsatz von Mikroverdampfern zur Verdampfung von Formamid in einem Verfahren zur Herstellung von Blausäure durch Dehydratisierung von gasförmigem Formamid ist im Stand der Technik jedoch nicht offenbart.

Ein bevorzugt in Schritt i) des erfindungsgemäßen Verfahrens eingesetzter Mikroverdampfer umfasst mehrere parallele, alternierend übereinander angeordnete und mikrostrukturierte Lagen von Verdampfungs- und Temperierkanälen, wobei die Lagen bevorzugt so ausgestaltet sind, dass jede Lage eine Vielzahl von parallel zueinander angeordneten Kanälen aufweist, die von einer Seite der Lage bis zur gegenüberliegenden Seite der Lage einen durchgehenden Strömungsweg ausbilden.

Als Lage wird im Sinne der vorliegenden Erfindung eine weitgehend zweidimensionale, flächige Baueinheit verstanden, d.h., eine Baueinheit, deren Dicke im Verhältnis zu ihrer Fläche vernachlässigbar gering ist. Bevorzugt handelt es sich bei der Lage um eine im Wesentlichen ebene Platte.

Die Lagen, insbesondere Platten, sind - wie vorstehend erwähnt - mikrostrukturiert, indem sie Kanäle aufweisen, die von Formamid (so genannte Verdampferkanäle) bzw. Wärmeträger (Heizmedium) (so genannte Temperierkanäle) durchströmt sind. Falls die Temperierung der Verdampferoberflächen durch elektrische Wärmezufuhr, z.B. über Heizdrähte oder Heizkerzen erfolgt, können die Temperierkanäle entfallen. Unter dem Begriff mikrostrukturiert wird verstanden, dass der mittlere, hydraulische Durchmesser der Kanäle maximal 1 mm ist.

Ein weiterer Gegenstand der vorliegenden Erfindung ist daher ein erfindungsgemäßes Verfahren, worin in Schritt i) des erfindungsgemäßen Verfahrens ein Mikroverdampfer eingesetzt wird, der Kanäle für die Führung des Formamids mit einem hydraulischen Durchmesser von 5 bis 1000 µm, besonders bevorzugt 100 bis 300 µm aufweist.

In einer bevorzugten Ausführungsform des in Schritt i) des erfindungsgemäßen Verfahrens eingesetzten Mikroverdampfers sind alternierend zu den vom Formamid durchströmten Lagen (A) Lagen (B) angeordnet, denen auf einer Seite ein Wärmeträger zugeführt und auf der anderen Seite abgezogen wird. Hierbei ist es möglich, dass die alternierende Anordnung der Lagen A, B so ausgebildet ist, dass auf jede Lage A jeweils eine Lage B folgt, oder dass auf jeweils zwei oder mehr aufeinander folgende Lagen A eine Lage B folgt oder dass auf jeweils zwei oder mehr aufeinander folgende Lagen B jeweils eine Lage A folgt.

Der bevorzugt eingesetzte Mikroverdampfer ist je nach im Allgemeinen aus mehr als 30 Lagen, bevorzugt mehr als 100 Lagen, besonders bevorzugt mehr als 200 Lagen aufgebaut.

Die Kanäle der Lagen A und B können so angeordnet werden, dass sich eine Kreuz-, Gegen- oder Gleichstromführung ergibt. Des Weiteren sind beliebige Mischformen denkbar.

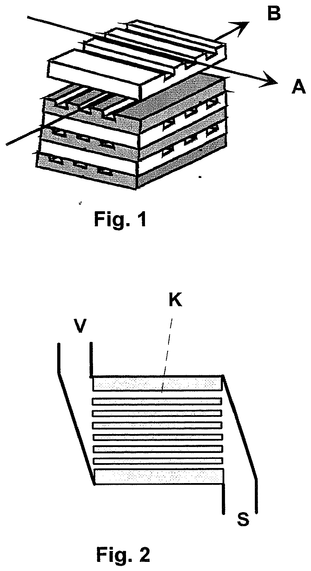

In Figur 1 ist ein schematischer dreidimensionaler Ausschnitt eines Mikroverdampfers beispielhaft dargestellt, wobei in Figur 1 die Lagen A und B alternierend angeordnet sind, wobei auf jede Lage A eine Lage B folgt und die Anordnung der Lagen A und B so erfolgt, dass sich eine Kreuzstromführung ergibt.

In Figur 1 bedeuten:
A Formamid durchströmte Lagen A
B von Wärmeträger (Heizmedium) durchströmte Lagen B

Die Pfeile geben jeweils die Strömungsrichtung des Formamids bzw. des Heizmediums an.

Der bevorzugt in Schritt i) des erfindungsgemäßen Verfahrens eingesetzte Mikroverdampfer umfasst mindestens eine Verteil- und mindestens eine Sammeleinrichtung zur Verteilung bzw. Sammlung des Formamids bzw. des Wärmeträgers. In einer Ausführungsform ist die Verteil- und Sammeleinrichtung jeweils als eine außerhalb oder innerhalb eines Stapels der Lagen A, B angeordnete Kammer ausgebildet. Hierbei können die Wände der Kammer gerade oder beispielsweise halb kreisförmig gebogen sein. Wesentlich ist, dass die geometrische Form der Kammer geeignet ist, Strömung und Druckverlust so zu gestalten, dass eine gleichmäßige Durchströmung der Kanäle des Mikroverdampfers erreicht wird. In einer besonders bevorzugten Ausführungsform eines Verteilers wird das flüssige Formamid gleichmäßig von oben auf die Öffnungen der Verdampferkanäle versprüht z.B. mit dem Fachmann bekannten Düsen oder durch Anströmen der Kanäle von unten. Die Kanäle sind dabei im unteren Bereich temperiert, im Allgemeinen bei Temperaturen < 150°C, bei denen keine Zersetzung stattfindet und das Formamid flüssig vorliegt, und im folgenden Teil beheizt - dem eigentlichen Verdampferteil.

In einer Ausführungsform der vorliegenden Erfindung sind die Verteil- und Sammeleinrichtungen jeweils innerhalb eines Stapels der Lagen A, B angeordnet, bevorzugt indem die parallel zueinander angeordneten Kanäle jeder Lage A im Bereich der beiden Enden der Lagen A jeweils einen, die parallel zueinander angeordneten Kanäle verbindenden Querkanal aufweisen und alle Querkanäle innerhalb des Stapels der Lagen A, B durch einen im Wesentlichen senkrecht zur Ebene der Lagen A, B angeordneten Sammelkanal verbunden sind. Auch in dieser Ausführungsform ist eine gleichmäßige Durchströmung der Kanäle wesentlich.

In einer bevorzugten Ausführungsform der vorliegenden Erfindung ist sowohl für die Lagen A als auch für die Lagen B, deren Kanäle von einem Wärmeträger durchströmt werden, jeweils eine Verteil- und Sammeleinrichtung entsprechend der Verteil- und Sammeleinrichtung für die Lagen A, die vorstehend beschrieben wurden, vorgesehen.

In Figur 2 ist eine schematische Draufsicht einer Lage, wobei es sich um eine Lage A oder B handeln kann, beispielhaft dargestellt. Innerhalb der Lage ist eine Verteileinrichtung V und eine Sammeleinrichtung S schematisch dargestellt.

In Figur 2 bedeuten
- V: Verteileinrichtung
- S: Sammeleinrichtung
- K: Kanäle

Es kann vorteilhaft sein, Schritt i) des erfindungsgemäßen Verfahrens in der Weise durchzuführen, dass entlang der Kanäle jeder Lage A ein Temperaturprofil durchlaufen wird, indem pro Lage zwei oder mehrere Heiz- oder Kühlzonen mit jeweils mindestens einer Verteil- und Sammeleinrichtung pro Heiz- oder Kühlzone der Lagen B zur entsprechenden Temperierung in den Kanälen der Lagen A vorgesehen sind.

Die spezifische Verdampferleistung des bevorzugt in Schritt i) des erfindungsgemäßen Verfahrens eingesetzten Mikroverdampfers beträgt in einer bevorzugten Ausführungsform der vorliegenden Erfindung 5 bis 200 kg/m²h, bevorzugt 10 bis 200 kg/m²h, besonders bevorzugt 50 bis 150 kg/m²h. Die volumenspezifische Verdampferleistung beträgt im Allgemeinen 100 bis 2000 MW/m³.

Die Herstellung des erfindungsgemäß eingesetzten Mikroverdampfers kann nach dem Fachmann bekannten Verfahren erfolgen. Geeignete Verfahren sind z.B. in V. Hessel, H. Löwe, A. Müller, G. Kolb, Chemical Micro Process Engineering-Processing and Plants, Wiley-VCH, Weinheim, 2005, S. 385 bis 391 und W. Ehrfeld, V. Hessel, V. Haverkamp, Microreactors, Ullmann's Encyclopedia of Industrial Chemistry, Wiley-VCH, Weinheim 1999 offenbart. Üblicherweise umfasst die Herstellung die Erzeugung einer Mikrostruktur in den einzelnen Lagen durch Bearbeitung von Platten aus für den Mikroverdampfer geeigneten Materialien, das Stapeln der Lagen, das Fügen der Lagen zum Zusammenbau des Mikroverdampfers und das Anbringen von Anschlüssen für die Zuleitung des flüssigen Formamids bzw. die Ableitung des gasförmigen Formamids und ggf. für die Zu- und Ableitung des Wärmeträgers. In DE-A 10 2005 051 637 sind verschiedene Herstellungsverfahren für mikrostrukturierte Reaktoren beschrieben, die entsprechend zur Herstellung des erfindungsgemäß eingesetzten Mikroverdampfers angewendet werden können.

Im Allgemeinen wird Schritt i) des erfindungsgemäßen Verfahrens so durchgeführt, dass dem Mikroverdampfer flüssiges Formamid zugeführt wird. Dieses wird in Schritt i) des erfindungsgemäßen Verfahrens zu gasförmigem Formamid verdampft, welches anschließend in der katalytischen Dehydratisierung in Schritt ii) des erfindungsgemäßen Verfahrens eingesetzt wird.

Bevorzugt wird das Formamid in Schritt i) des erfindungsgemäßen Verfahrens vollständig (restlos) verdampft. Besonders bevorzugt wird das Formamid in Schritt i) vollständig verdampft und der entstehende Formamiddampf auf Temperaturen von im Allgemeinen 230°C oder mehr überhitzt. Der überhitzte Formamiddampf kann direkt in Schritt ii) eingesetzt werden.

Vor der Zuführung des in Schritt i) erhaltenen gasförmigen Formamids in Schritt ii) des erfindungsgemäßen Verfahrens kann dem gasförmigen Formamid Sauerstoff z.B. in Form von Luftsauerstoff oder in Form eines Sauerstoff enthaltenden Gasgemisches zugeführt werden, wobei der Sauerstoffanteil gegebenenfalls in einem vorgewärmten Zustand zugeführt werden kann.

In einer bevorzugten Ausführungsform wird Schritt ii) des erfindungsgemäßen Verfahrens in Anwesenheit von Sauerstoff, bevorzugt Luftsauerstoff, durchgeführt. Die Mengen an Sauerstoff, bevorzugt Luftsauerstoff, betragen im Allgemeinen > 0 bis 10 mol-%, bezogen auf die eingesetzte Formamidmenge, bevorzugt 0,1 bis 10 mol-%, besonders bevorzugt 0,5 bis 3 mol-%.

Anschließend kann das gasförmige Formamid (Formamid-Dampf) bzw. das Formamid-Sauerstoff-Gemisch, bevorzugt das Formamid-Luft-Gemisch, in einem Wärmetauscher auf Temperaturen von 350°C oder mehr gebracht werden, bevor es Schritt ii) zugeführt wird. Es ist jedoch ebenfalls möglich, den vorstehend erwähnten in Schritt i) erhaltenen gering überhitzten Formamiddampf direkt, ggf. nach Zumischung von Sauerstoff, in Schitt ii) einzusetzen.

Die katalytische Dehydratisierung in Schritt ii) des erfindungsgemäßen Verfahrens erfolgt im Allgemeinen bei Temperaturen von 350 bis 650°C, bevorzugt 380 bis 550°C, besonders bevorzugt 440 bis 510°C. Werden aber höhere Temperaturen gewählt, ist mit verschlechterten Selektivitäten und Umsätzen zu rechnen.

Der Druck in Schritt ii) des erfindungsgemäßen Verfahrens beträgt im Allgemeinen 400 mbar bis 3 bar, bevorzugt 400 mbar bis 1,5 bar, bevorzugt 600 mbar bis 1,4 bar.

Als Reaktor können in Schritt ii) des erfindungsgemäßen Verfahrens alle dem Fachmann zur Dehydratisierung von Formamid bekannten Reaktoren eingesetzt werden. Bevorzugt werden in Schritt ii) des erfindungsgemäßen Verfahrens Rohrreaktoren eingesetzt, wobei geeignete Rohrreaktoren dem Fachmann bekannt sind. Besonders bevorzugt handelt es sich bei den Rohrreaktoren um Mehrrohrreaktoren. Geeignete Mehrrohrreaktoren sind dem Fachmann ebenfalls bekannt.

Geeignete Materialien der in Schritt ii) des erfindungsgemäßen Verfahrens eingesetzten Reaktoren sind dem Fachmann ebenfalls bekannt. Bevorzugt wird als innere Oberfläche des Reaktors eine eisenhaltige Oberfläche eingesetzt. In einer besonders bevorzugten Ausführungsform ist die innere Reaktoroberfläche aus Stahl aufgebaut, der besonders bevorzugt Eisen sowie Chrom und Nickel enthält. Der Anteil an Eisen in dem bevorzugt die innere Reaktoroberfläche bildenden Stahl beträgt im Allgemeinen > 50 Gew.-%, bevorzugt > 60 Gew.-%, besonders bevorzugt > 70.Gew.-%. Der Rest sind im Allgemeinen Nickel und Chrom, wobei gegebenenfalls geringe Mengen weiterer Metalle wie Molybdän, Mangan, Silizium, Aluminium, Titan, Wolfram, Kobalt mit einem Anteil von im Allgemeinen 0 bis 5 Gew.-%, bevorzugt 0 bis 2 Gew.-%, enthalten sein können. Für die innere Reaktoroberfläche geeignete Stahlqualitäten sind im Allgemeinen Stahlqualitäten entsprechend den Normen 1.4541, 1.4571, 1.4573, 1.4580, 1.4401, 1.4404, 1.4435, 2.4816, 1.3401, 1.4876 und 1.4828. Bevorzugt werden Stahlqualitäten entsprechend den Normen 1.4541, 1.4571, 1.4828, 1.3401, 1.4876 und 1.4762, besonders bevorzugt Stahlqualitäten entsprechend den Normen 1.4541, 1.4571, 1.4762 und 1.4828 eingesetzt.

Mithilfe eines solchen Rohrreaktors ist eine katalytische Dehydratisierung von gasförmigem Formamid zu Blausäure in Schritt ii) des erfindungsgemäßen Verfahrens möglich, ohne dass zusätzliche Katalysatoren eingesetzt werden müssen bzw. der Reaktor zusätzliche Einbauten aufweist.

Es ist jedoch ebenfalls möglich, dass die katalytische Dehydratisierung in Schritt ii) des erfindungsgemäßen Verfahrens in Anwesenheit von Formkörpern als Katalysatoren durchgeführt wird, wobei die Formkörper bevorzugt hoch gesinterte Formkörper, aufgebaut aus Aluminiumoxid und gegebenenfalls Siliziumoxid sind, bevorzugt aus 50 bis 100 Gew.-% Aluminiumoxid und 0 bis 50 Gew.-% Siliziumoxid, besonders bevorzugt aus 85 bis 95 Gew.-% Aluminiumoxid und 5 bis 15 Gew.-% Siliziumoxid, oder aus Chrom-Nickel-Edelstahl, wie z.B. in EP-A 0 209 039 beschrieben. Des Weiteren kann es sich bei geeigneten in Schritt ii) des erfindungsgemäßen Verfahrens eingesetzten Katalysatoren um Packungen aus Stahl oder Eisenoxid auf porösen Trägermaterialien, z.B. Aluminiumoxid, handeln. Geeignete Packungen sind z.B. in DE-A 101 38 553 beschrieben.

Werden Formkörper eingesetzt, so können als mögliche Formkörper sowohl geordnete als auch ungeordnete Formlinge eingesetzt werden, z.B. Raschig-Ringe, Pal-Ringe, Tabletten, Kugeln und ähnliche Formlinge. Wesentlich ist hierbei, dass die Packungen bei mäßigem Druckverlust guten Wärmeübergang ermöglichen. Die Größe bzw. Geometrie der verwendeten Formlinge richtet sich im Allgemeinen nach dem Innendurchmesser der mit diesen Formkörpern zu füllenden Reaktoren, bevorzugt Rohrreaktoren.

Geeignete Packungen aus Stahl oder Eisenoxid sind im Allgemeinen geordnete Packungen. Bevorzugt handelt es sich bei den geordneten Packungen um statische Mischer. Durch den Einsatz der statischen Mischer kann ein einheitlicher Druck sowie ein hervorragender Wärmeübergang im Rohrreaktor erreicht werden. Die statischen Mischer können beliebige Geometrien aufweisen, wie sie dem Fachmann bekannt sind. Bevorzugte statische Mischer sind aus Blechen aufgebaut, wobei es sich um Lochbleche und/oder geformte Bleche handeln kann. Es können selbstverständlich ebenfalls geformte Lochbleche eingesetzt werden.

Geeignete Formkörper sind in EP-A 0 209 039 beschrieben und geeignete statische Mischer sind in DE-A 101 38 553 beschrieben.

Es ist ebenfalls möglich, dass in Schritt ii) des erfindungsgemäßen Verfahrens ein Reaktor, bevorzugt ein Rohrreaktor, eingesetzt wird, der Formkörper und/oder Packungen aus Stahl oder Eisenoxid auf einem porösen Träger aufweist, dessen Reaktorwand zusätzlich katalytisch aktiv ist. Geeignete Reaktorwand-Materialien, die in Schritt ii) des erfindungsgemäßen Verfahrens katalytisch aktiv sind, sind vorstehend genannt und z.B. in WO 2004/050587 beschrieben.

Die optimale Verweilzeit des Formamid-Gasstroms in Schritt ii) des erfindungsgemäßen Verfahrens ergibt sich bei Einsatz eines Rohrreaktors (was bevorzugt ist) aus der längenspezifischen Formamidbelastung, die bevorzugt 0,02 bis 0,4 kg/(mh), bevorzugt 0,05 bis 0,3, besonders bevorzugt 0,08 bis 0,2 im Bereich laminarer Strömung beträgt. Die optimale Verweilzeit des Formamid-Gasstroms in Schritt ii) des erfindungsgemäßen Verfahrens ergibt sich bei Einsatz eines Rohrreaktors (was bevorzugt ist) aus der flächenspezifischen Formamidbelastung, die im Allgemeinen 0,1 bis 100 kg/m², bevorzugt 0,2 bis 50 kg/m², besonders bevorzugt 0,5 bis 20 kg/m² beträgt.

Das erfindungsgemäße Verfahren zur Herstellung von Blausäure liefert die gewünschte Blausäure in hohen Selektivitäten von im Allgemeinen > 85%, bevorzugt > 90% und Umsätzen von im Allgemeinen > 70%, bevorzugt > 80%, so dass Ausbeuten von im Allgemeinen > 60%, bevorzugt > 75%, besonders bevorzugt > 88% erreicht werden.

Bei dem Einsatz von Mikroverdampfern können neben den vorstehend genannten Vorteilen des Weiteren Anlagen zur Herstellung von Blausäure bereitgestellt werden, die wesentlich kleiner sind, als üblicherweise zur Herstellung von Blausäure eingesetzte Anlagen. Solche Anlagen sind mobiler und somit vielseitiger einsetzbar, und können z.B. dort aufgebaut werden, wo Blausäure benötigt wird, so dass ein Transport von Blausäure oder Salzen der Blausäure (z.B. Alkali- und Erdalkalisalze) über weitere Strecken vermieden werden kann.

Wie vorstehend erwähnt, sind die Vorrichtungen zur Herstellung von Blausäure klein und somit flexibel einsetzbar.

Ein weiterer Gegenstand der vorliegenden Erfindung ist die Verwendung eines Mikroverdampfers zur Verdampfung von Formamid in einem Verfahren zur Herstellung von Blausäure aus Formamid wie im Anspruch 13 definiert.

Bevorzugte Mikroverdampfer, bevorzugte Rohrreaktoren sowie ein bevorzugtes Verfahren zur Herstellung von Blausäure aus Formamid sind bereits vorstehend erwähnt.

Die nachfolgenden Beispiele erläutern die Erfindung zusätzlich.

### Beispiele

### Verdampfung:

### Beispiel 1

Die Versuche werden in einer diskontinuierlichen Labordestillationsapparatur bestehend aus Dreihalskolben, Thermometer und wassergekühlter Destillationsbrücke durchgeführt. In den Kolben werden jeweils 50 g Formamid vorgelegt, bei verschiedenen Drucken möglichst rasch auf Siedetemperatur gebracht und überdestilliert. Die Beheizung erfolgt mit einem elektrisch betriebenen Heizpilz. Als Maß für die Formamidzersetzung dient die Massendifferenz zwischen vorgelegtem Formamid und ausgewogener Destillatmenge.

**Tabelle 1: Übersicht des Ergebnisses zur Formamidverdampfung im Kolben.**

| Druck [mbar] | Siedetemperatur Messung [°C] | Formamidzersetzung [%] |
|---|---|---|
| 1010 (Normaldruck) | 198 | 50,5 |

### Beispiel 2

Die Versuche werden mit einem Mikroverdampfer aufgebaut aus 1700 Rechteckkanälen durchgeführt. Die Rechteckkanäle haben die Abmessungen 200x100 µm und 14 mm Länge. Die Rechteckkanäle teilen sich hälftig auf die Temperier- und Verdampfungsseite auf und sind lagenweise alternierend im Kreuzstrom zueinander angeordnet. In Summe ist der Mikroverdampfer aus 50 Lagen aufgebaut. Der Mikroverdampfer wird mit 40 bar Dampf über die Temperierkanäle beheizt. Die Verdampferkanäle werden mit 100 g/h Formamid beaufschlagt. Dies entspricht einer volumenspezifische Verdampferleistung von 130 MW/m³. Über eine Versuchsdauer von 6 h wird kein Druckverlustanstieg über die Kanäle beobachtet. Der Formamiddampf wird mit einem üblichen Laborkondensator kondensiert. Als Maß für die Formamidzersetzung dient die Massendifferenz zwischen vorgelegtem Formamid und ausgewogener Kondensatmenge.

**Tabelle 2: Übersicht des Ergebnisses zur Formamidverdampfung im Mikroverdampfer**

| Druck [mbar] | Temperatur des Formamid-Dampfes am Austritt [°C] | Formamidzersetzung [%] |
|---|---|---|
| 1010 (Normaldruck) | 225°C | 0,5 |

### Zersetzung

Das Experiment wird mit Rohrreaktoren mit 40 mm Länge und 12 mm Innendurchmesser durchgeführt. Beim Versuchsaufbau handelt es sich um einen Silberblock, in dem das Reaktionsrohr passgenau eingelassen wird. Die Rohre bestehen aus dem Stahl 1.4541. Beheizt wird der Silberblock mit Heizstäben. Durch den guten Wärmeübergang im Silberbett kann ein isothermer Betrieb der Rohrwand gewährleistet werden. Der Reaktor wird mit dampfförmigem Formamid beaufschlagt und bei 520°C betrieben.

### Beispiel 3

Das Experiment wird in der Apparatur wie vorstehend unter "Zersetzung" beschrieben durchgeführt. Der Reaktionsdruck beträgt 600 mbar.

**Tabelle 3: Übersicht zur Formamidzersetzung in einem Rohrreaktor bei 600 mbar**

| Formamidzufuhr | Umsatz | HCN-Selektivität |
|---|---|---|
| 100 g/h | 92% | 94 |

### Beispiel 4

Das Experiment wird in der Apparatur wie vorstehend unter "Zersetzung" beschrieben durchgeführt. Der Reaktionsdruck beträgt 400 mbar.

**Tabelle 4: Übersicht zur Formamidzersetzung in einem Rohrreaktor bi 400 mbar**

| Formamidzufuhr | Umsatz | HCN-Selektivität [%] |
|---|---|---|
| 100 g/h | 94% | 94% |

### Beispiel 5

Das Experiment wird in der Apparatur wie vorstehend unter "Zersetzung" beschrieben durchgeführt. Der Reaktionsdruck beträgt 230 mbar.

**Tabelle 5: Übersicht zur Formamidzersetzung in einem Rohrreaktor bei 230 mbar**

| Formamidzufuhr | Umsatz | HCN-Selektivität [%] |
|---|---|---|
| 100 g/h | 93% | 95% |

## Patentansprüche

1. Verfahren zur Herstellung von Blausäure, umfassend
i) Bereitstellung von gasförmigem Formamid durch Verdampfen von flüssigem Formamid in einem Verdampfer; und
ii) katalytische Dehydratisierung des gasförmigen Formamids,
wobei in Schritt i) die Verweilzeit des Formamids in dem Verdampfer < 20 s, bezogen auf das flüssige Formamid, beträgt,
**dadurch gekennzeichnet, dass** als Verdampfer in Schritt i) ein Mikroverdampfer eingesetzt wird, wobei der Mikroverdampfer Kanäle für die Führung des Formamids mit einem hydraulischen Durchmesser von 5 bis 1000 µm aufweist und die Verdampfung in Schritt i) bei Temperaturen von 185°C bis 265°C erfolgt.

2. Verfahren nach Anspruch 1, **dadurch gekennzeichnet, dass** die Verdampfung in Schritt i) bei einem Druck von 400 mbar bis 4 bar Absolutdruck erfolgt.

3. Verfahren nach Anspruch 1 oder 2, **dadurch gekennzeichnet, dass** die Verdampfung in Schritt i) bei Temperaturen von 210°C bis 260°C erfolgt.

4. Verfahren nach einem der Ansprüche 1 bis 3, **dadurch gekennzeichnet, dass** der Mikroverdampfer Kanäle für die Führung des Formamids mit einem hydraulischen Durchmesser von 10 bis 300 µm aufweist.

5. Verfahren nach einem der Ansprüche 1 bis 4, **dadurch gekennzeichnet, dass** der Mikroverdampfer eine volumenspezifische Verdampferleistung von 100 bis 2000 MW/m³ aufweist.

6. Verfahren nach einem der Ansprüche 1 bis 5, **dadurch gekennzeichnet, dass** die katalytische Dehydratisierung in Schritt ii) bei Temperaturen von 350 bis 650°C erfolgt.

7. Verfahren nach einem der Ansprüche 1 bis 6, **dadurch gekennzeichnet, dass** die katalytische Dehydratisierung in Schritt ii) bei einem Druck von 400 mbar bis 3 bar Absolutdruck durchgeführt wird.

8. Verfahren nach Anspruch 7, **dadurch gekennzeichnet, dass** die Dehydratisierung in Schritt ii) bei einem Druck von 400 mbar bis 1,5 bar Absolutdruck durchgeführt wird.

9. Verfahren nach einem der Ansprüche 1 bis 8, **dadurch gekennzeichnet, dass** die katalytische Dehydratisierung in Schritt ii) in einem Rohrreaktor, bevorzugt einem Mehrrohrreaktor, erfolgt.

10. Verfahren nach Anspruch 9, **dadurch gekennzeichnet, dass** die katalytische Dehydratisierung in Schritt ii) in Anwesenheit von Formkörpern, ausgewählt aus hoch gesinterten Formkörpern, aufgebaut aus Aluminiumoxid und gegebenenfalls Siliziumoxid und Chrom-Nickel-Edelstahl-Formkörpern oder in Anwesenheit von Packungen aus Stahl oder Eisenoxid auf porösen Trägermaterialien als Katalysatoren erfolgt und/oder die innere Reaktoroberfläche des Rohrreaktors aus Stahl aufgebaut ist und als Katalysator dient.

11. Verfahren nach einem der Ansprüche 1 bis 10, **dadurch gekennzeichnet, dass** die katalytische Dehydratisierung in Schritt ii) in Anwesenheit von Sauerstoff durchgeführt wird.

12. Verfahren nach einem der Ansprüche 9 bis 11, **dadurch gekennzeichnet, dass** die katalytische Dehydratisierung in Schritt ii) bei einer längenspezifischen Formamid-Belastung von 0,02 bis 0,4 kg/(mh) im Bereich laminarer Strömung erfolgt.

13. Verwendung eines Mikroverdampfers zur Verdampfung von Formamid in einem Verfahren zur Herstellung von Blausäure aus Formamid gemäß einem der Ansprüche 1 bis 12, wobei der Mikroverdampfer Kanäle für die Führung des Formamids mit einem hydraulischen Durchmesser von 5 bis 1000 µm aufweist.

## Claims

1. A process for preparing hydrogen cyanide, comprising
i) providing gaseous formamide by evaporating liquid formamide in an evaporator; and
ii) catalytically dehydrating the gaseous formamide,
where the residence time of the formamide in the evaporator in step i) is < 20 s based on the liquid formamide,
wherein the evaporator used in step i) is a microevaporator having channels to guide the formamide which have a hydraulic diameter of from 5 to 1000 *µ*m and the evaporation in step i) is effected at temperatures of from 185°C to 265°C.

2. The process according to claim 1, wherein the evaporation in step i) is effected at a pressure of from 400 mbar to 4 bar absolute.

3. The process according to claim 1 or 2, wherein the evaporation in step i) is effected at temperatures of from 210°C to 260°C.

4. The process according to any one of claims 1 to 3, wherein the microevaporator has channels to guide the formamide which have a hydraulic diameter of from 10 to 300 *µ*m.

5. The process according to any one of claims 1 to 4, wherein the microevaporator has a volume-specific evaporator output of from 100 to 2000 MW/m³.

6. The process according to any one of claims 1 to 5, wherein the catalytic dehydration in step ii) is effected at temperatures of from 350 to 650°C.

7. The process according to any one of claims 1 to 6, wherein the catalytic dehydration in step ii) is performed at a pressure of from 400 mbar to 3 bar absolute.

8. The process according to claim 7, wherein the dehydration in step ii) is performed at a pressure of from 400 mbar to 1.5 bar absolute.

9. The process according to any one of claims 1 to 8, wherein the catalytic dehydration in step ii) is effected in a tubular reactor, preferably a multitube reactor.

10. The process according to claim 9, wherein the catalytic dehydration in step ii) is effected in the presence of shaped bodies selected from highly sintered shaped bodies formed from alumina and optionally silica, and chromium-nickel-stainless steel shaped bodies, or in the presence of packings made of steel or iron oxide on porous support materials as catalysts, and/or the inner reactor surface of the tubular reactor is formed from steel and serves as a catalyst.

11. The process according to any one of claims 1 to 10, wherein the catalytic dehydration in step ii) is performed in the presence of oxygen.

12. The process according to any one of claims 9 to 11, wherein the catalytic dehydration in step ii) is effected at a length-specific formamide loading of from 0.02 to 0.4 kg/(mh) in the range of laminar flow.

13. The use of a microevaporator for evaporating formamide in a process for preparing hydrogen cyanide from formamide according to any one of claims 1 to 12, where the microevaporator has channels to guide the formamide which have a hydraulic diameter of from 5 to 1000 *µ*m.

## Revendications

1. Procédé pour la production d'acide cyanhydrique, comprenant
i) la mise à disposition de formamide gazeux par vaporisation de formamide liquide dans un vaporiseur, et
ii) la déshydratation catalytique du formamide gazeux,
dans l'étape i) le temps de séjour du formamide dans le vaporiseur étant < 20 s, sur la base du formamide liquide,
**caractérisé en ce que** comme vaporiseur dans l'étape i) on utilise un microvaporiseur, le microvaporiseur comportant des canaux pour la conduite du formaldéhyde, ayant un diamètre hydraulique de 5 à 1 000 *µ*m, et la vaporisation dans l'étape i) s'effectue à des températures de 185 °C à 265 °C.

2. Procédé selon la revendication 1, **caractérisé en ce que** la vaporisation dans l'étape i) s'effectue sous une pression de 400 mbars à 4 bars de pression absolue.

3. Procédé selon la revendication 1 ou 2, **caractérisé en ce que** la vaporisation dans l'étape i) s'effectue à des températures de 210 °C à 260 °C.

4. Procédé selon l'une quelconque des revendications 1 à 3, **caractérisé en ce que** le microvaporiseur comporte des canaux pour la conduite du formamide, ayant un diamètre hydraulique de 10 à 300 *µ*m.

5. Procédé selon l'une quelconque des revendications 1 à 4, **caractérisé en ce que** le microvaporiseur présente une puissance volumique de vaporiseur de 100 à 2 000 MW/m³.

6. Procédé selon l'une quelconque des revendications 1 à 5, **caractérisé en ce que** la déshydratation catalytique dans l'étape ii) s'effectue à des températures de 350 à 650 °C.

7. Procédé selon l'une quelconque des revendications 1 à 6, **caractérisé en ce que** la déshydratation catalytique dans l'étape ii) s'effectue sous une pression de 400 mbars à 3 bars de pression absolue.

8. Procédé selon la revendication 7, **caractérisé en ce que** la déshydratation dans l'étape ii) s'effectue sous une pression de 400 mbars à 1,5 bar de pression absolue.

9. Procédé selon l'une quelconque des revendications 1 à 8, **caractérisé en ce que** la déshydratation catalytique dans l'étape ii) s'effectue dans un réacteur tubulaire, de préférence un réacteur à tubes multiples.

10. Procédé selon la revendication 9, **caractérisé en ce que** la déshydratation catalytique dans l'étape ii) s'effectue en présence de corps moulés, choisis parmi des corps moulés hautement frittés, constitués d'oxyde d'aluminium et éventuellement d'oxyde de silicium et de corps moulés à base de chrome-nickel-acier inoxydable ou en présence de garnissages à base d'acier ou d'oxyde de fer sur des matériaux de support poreux, en tant que catalyseurs et/ou la surface interne de réacteur du réacteur tubulaire est constituée d'acier et sert de catalyseur.

11. Procédé selon l'une quelconque des revendications 1 à 10, **caractérisé en ce que** la déshydratation catalytique dans l'étape ii) est effectuée en présence d'oxygène.

12. Procédé selon l'une quelconque des revendications 9 à 11, **caractérisé en ce que** la déshydratation catalytique dans l'étape ii) s'effectue à une charge de formamide sur la base de la longueur de 0,02 à 0,4 kg/(mh) dans la zone de flux laminaire.

13. Utilisation d'un microvaporiseur pour la vaporisation de formamide dans un procédé pour la production d'acide cyanhydrique à partir de formamide selon l'une quelconque des revendications 1 à 12, le microvaporiseur comportant des canaux pour la conduite du formaldéhyde, ayant un diamètre hydraulique de 5 à 1 000 *µ*m.
